# EUROPEAN PATENT APPLICATION

(11) **EP 2 477 096 A1**
(43) Date of publication of application: **18.07.2012**
(21) Application number: 10815179.6
(22) Date of filing: 20.04.2010
(51) Int. Cl.: G06F 3/041

(54) **GESTURE DETERMINATION DEVICE AND METHOD OF SAME**

(30) Priority: 09.09.2009 JP 2009208062
(71) Applicant: Sharp Kabushiki Kaisha, Osaka-shi, Osaka 545-8522 (JP)
(72) Inventor: NISHIDA, Osamu, Osaka-shi, Osaka 545-8522 (JP); FUJIMOTO, Fumiaki, Osaka-shi, Osaka 545-8522 (JP); YODA, Kazuhiko, Osaka-shi, Osaka 545-8522 (JP)
(74) Representative: Goddar, Heinz J.
(86) International application number: PCT/JP2010/056981
(87) International publication number: WO 2011/030581

(57) **Abstract**

A gesture determination device (1) includes the following: a coordinate data acquisition unit (10) that acquires coordinate data for each predetermined time period generated by an operation of a user; a first angle-category generation unit (11) that generates a first angle-category at first time intervals based on the coordinate data; a second angle-category generation unit (12) that generates a second angle-category at second time intervals based on the coordinate data, in which the second time interval is longer than the first time interval; and a gesture determination unit (13) that determines a gesture based on the first angle-category and/or the second angle-category. When a time interval defined to generate the second angle-category includes an overlapping time period with a time interval defined to generate the first angle-category, the gesture is determined by giving priority to the second angle-category over the first angle-category.

## Description

### Technical Field

The present invention relates to a device and a method for determining a gesture based on input coordinates.

### Background Art

In the field of electronic apparatuses, it has been known that an electronic apparatus or the like has the functions of determining gestures based on the locus of the coordinates input to a touch panel or a touch pad with a fingertip or a pen point, and receiving various operation commands corresponding to each of the determined gestures. This gesture determination can be performed by angle category (also referred to as a "direction code").

For example, the input coordinates for each predetermined time period are acquired from the touch panel or the touch pad to calculate an angle for classification, thereby recognizing the direction of movement of the fingertip or the pen point.

On the other hand, in on-line handwritten character recognition, a system for recognizing a character by classifying segments according to their angles and performing structural analysis has been known (e.g., Patent Document 1). Moreover, a method for extracting the feature of a character pattern using a direction code has been known (e.g., Patent Document 2).

### Prior Art Documents

### Patent Documents

Patent Document 1: Japanese Patent No. 4092371
Patent Document 2: JP S60(1985)-110087 A

### Disclosure of Invention

### Problem to be Solved by the Invention

However, when the above gesture determination is performed so as to determine which direction the finger is moved at short time intervals (e.g., every 10 ms), in some cases, the electronic apparatus or the like cannot be operated with the user's intention. Specifically, even if the user intends to move the finger to the right side, the movement of the finger can be determined as a movement in the upper or lower right diagonal direction due to the effect of trembling of the hand or the like, or as a movement in the opposite direction when the user moves the finger off.

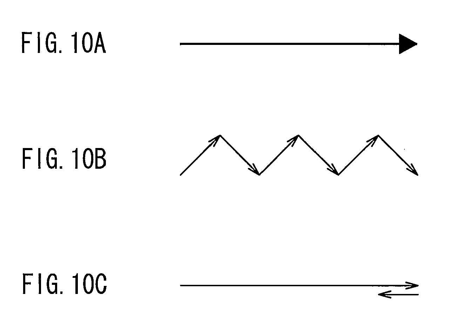

FIG. 10A shows an example of the movement of the finger that is intended by the user. FIG. 10B shows an example of the movement of the finger that is determined as a movement in the upper or lower right diagonal direction by the gesture determination. FIG. 10C shows an example of the movement of the finger that is determined as a movement in the opposite direction when the user moves the finger off by the gesture determination. In other words, although the user intends to move the finger as shown in FIG. 10A, the movement of the finger can be determined as a movement shown in FIG. 10B or 10C by the conventional gesture determination.

Therefore, when the user performs various operations by touching the touch panel or the touch pad with the finger, the intended operation cannot be performed.

In the case of the handwritten character recognition based on the structural analysis or the feature extraction of the character pattern using the direction code, since stroke data for one character is processed, real-time gesture determination cannot be performed for each predetermined time period.

With the foregoing in mind, it is an object of the present invention to provide a device and a method for determining a gesture that can accurately recognize a gesture intended by a user in real time.

### Means for Solving Problem

To achieve the above object, a gesture determination device as will be disclosed in the following determines a gesture performed by a user. The gesture determination device includes the following: a coordinate data acquisition unit that acquires coordinate data for each predetermined time period generated by an operation of the user; a first angle-category generation unit that generates a first angle-category at first time intervals based on the coordinate data; a second angle-category generation unit that generates a second angle-category at second time intervals based on the coordinate data, in which the second time interval is longer than the first time interval; and a gesture determination unit that determines a gesture based on the first angle-category and/or the second angle-category. When a time interval defined to generate the second angle-category includes an overlapping time period with a time interval defined to generate the first angle-category, the gesture is determined by giving priority to the second angle-category over the first angle-category.

### Effects of the Invention

The gesture determination device of the present invention has the effect of being able to accurately recognize the gesture intended by a user in real time.

### Brief Description of Drawings

[FIG. 1] FIG. 1 shows an example of a functional block diagram of a gesture determination device 1 of the present invention.
[FIG. 2A] FIG. 2A shows an example with the use of classification of an angle.
[FIG. 2B] FIG. 2B shows an example with the use of classification of an angle.
[FIG. 2C] FIG. 2C shows an example with the use of classification of an angle.
[FIG. 2D] FIG. 2D shows an example of an angle sequence.
[FIG. 2E] FIG. 2E shows an example of each gesture that is determined from an angel sequence.
[FIG. 3] FIG. 3 shows an example of a system configuration using the gesture determination device 1 of the present invention.
[FIG. 4A] FIG. 4A schematically shows communications between a microcomputer board 8 and a touch panel controller 6.
[FIG. 4B] FIG. 4B shows an example of coordinate data transmitted from the touch panel controller 6.
[FIG. 5] FIG. 5 shows an example of a flow chart of gesture determination processing.
[FIG. 6] FIG. 6 shows an example of a flow chart of pseudo attribute insertion processing.
[FIG. 7] FIG. 7 shows an example of a schematic diagram of the insertion of a pseudo attribute into the coordinate data transmitted from the touch panel controller 6.
[FIG. 8] FIG. 8 shows an example of a schematic diagram for explaining a case where the angle sequence is cleared.
[FIG. 9] FIG. 9 shows an example of a flow chart of gesture generation processing.
[FIG. 10A] FIG. 10A shows an example of the movement of a finger that is intended by a user.
[FIG. 10B] FIG. 10B shows an example of the movement of a finger that is determined as a movement in the upper or lower right diagonal direction by gesture determination.
[FIG. 10C] FIG. 10C shows an example of the movement of a finger that is determined as a movement in the opposite direction when a user moves the finger off by gesture determination.

### Description of the Invention

(1) A gesture determination device of an embodiment of the present invention determines a gesture performed by a user. The gesture determination device includes the following: a coordinate data acquisition unit that acquires coordinate data for each predetermined time period generated by an operation of the user; a first angle-category generation unit that generates a first angle-category at first time intervals based on the coordinate data; a second angle-category generation unit that generates a second angle-category at second time intervals based on the coordinate data, in which the second time interval is longer than the first time interval; and a gesture determination unit that determines a gesture based on the first angle-category and/or the second angle-category. When a time interval defined to generate the second angle-category includes an overlapping time period with a time interval defined to generate the first angle-category, the gesture is determined by giving priority to the second angle-category over the first angle-category. With this configuration, the gesture can be determined by combining the angle-category that is generated in the short time interval and represents the locus partially and the angle-category that is generated in the long time interval and represents the locus comprehensively, so that the gesture intended by the user can be accurately recognized in real time.

(2) In the above gesture determination device, when the time interval defined to generate the second angle-category includes an overlapping time period with the time interval defined to generate the first angle-category, the gesture may be determined without taking into account the first angle-category that is generated in the overlapping time period. With this configuration, the gesture can be easily determined by giving priority to the angle category that is generated in the long time interval and represents the locus comprehensively.

(3) In the above gesture determination device, when the time interval defined to generate the second angle-category includes an overlapping time period with the time interval defined to generate the first angle-category, the gesture may be determined by assigning a predetermined weight to the second angle-category that is generated in the overlapping time period. With this configuration, the gesture can be accurately determined by giving priority to the angle category that is generated in the long time interval and represents the locus comprehensively.

(4) In the above gesture determination device, the gesture may be determined based on the first angle-category and/or the second angle-category every time a predetermined number of sets of the coordinate data are acquired. With this configuration, the gesture can be efficiently determined at predetermined time intervals.

(5) The above gesture determination device may further include a third angle -category generation unit that generates a third angle-category at third time intervals based on the coordinate data, in which the third time interval is longer than the second time interval. Moreover, the gesture determination unit may determine a gesture based on the first angle-category, the second angle-category, and/or the third angle-category. When a time interval defined to generate the third angle-category includes an overlapping time period with the time interval defined to generate the first angle-category or the time interval defined to generate the second angle-category, the gesture may be determined by giving priority to the third angle-category over the first angle-category or the second angle-category. With this configuration, the gesture can be accurately determined with step-by-step timing.

(8) A touch panel system of an embodiment of the present invention includes at least a touch panel and a gesture determination device that determines a gesture performed by a user. The gesture determination device includes the following: a coordinate data acquisition unit that acquires coordinate data for each predetermined time period generated by an operation of the user on the touch panel; a first angle-category generation unit that generates a first angle-category at first time intervals based on the coordinate data; a second angle-category generation unit that generates a second angle-category at second time intervals based on the coordinate data, in which the second time interval is longer than the first time interval; and a gesture determination unit that determines a gesture based on the first angle-category and/or the second angle-category. When a time interval defined to generate the second angle-category overlaps a time interval defined to generate the first angle-category, the gesture is determined by giving priority to the second angle-category over the first angle-category. With this configuration, the gesture can be determined by combining the angle category that is generated in the short time interval and represents the locus partially and the angle category that is generated in the long time interval and represents the locus comprehensively, so that the touch panel system can accurately recognize the gesture intended by the user in real time.

Hereinafter, preferred embodiments of a display device of the present invention will be described with reference to the drawings. In the following description, the present invention is applied, e.g., to a vehicle instrument panel including a touch panel liquid crystal monitor. The present invention also can be applied to other display devices that have a touch panel provided on a pixel surface such as organic electroluminescence and PDP Moreover, the present invention can be applied to a touch input device that is independent of a display device such as a touch pad of a notebook personal computer.

### [1. Embodiment 1]

### [1-1. Functional block diagram]

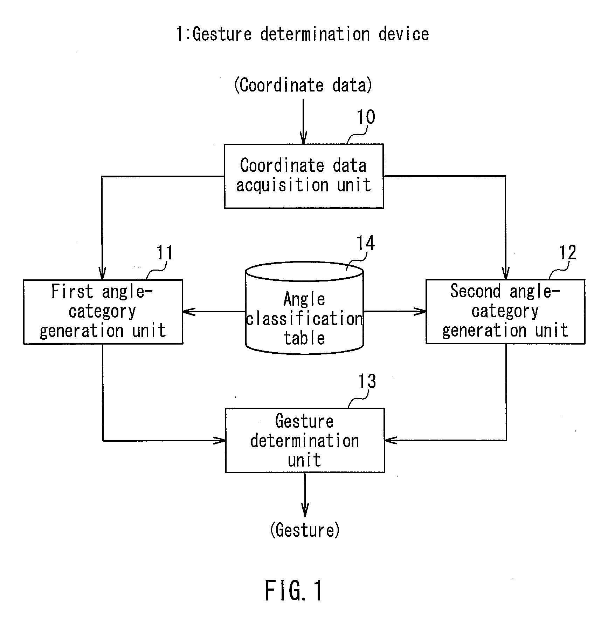

FIG. 1 shows an example of a functional block diagram of a gesture determination device 1 of the present invention. In FIG. 1, the gesture determination device 1 includes a coordinate data acquisition unit 10, a first angle-category generation unit 11, a second angle-category generation unit 12, and a gesture determination unit 13.

The coordinate data acquisition unit 10 acquires coordinate data for each predetermined time period generated by the operation of a user. The first angle-category generation unit 11 generates a first angle-category at first time intervals based on the coordinate data. The second angle-category generation unit 12 generates a second angle-category at second time intervals based on the coordinate data. The second time interval is longer than the first time interval. The gesture determination unit 13 determines a gesture based on the angle category (angle classification determined by a classified angle) generated by the first angle-category generation unit or the second angle-category generation unit.

Moreover, when the period of the second time interval during which the second angle-category is generated overlaps the period of the first time interval during which the first angle-category is generated, the gesture determination unit 13 determines a gesture by giving priority to the second angle-category. In this case, e.g., the first angle-category generation unit 11 and the second angle-category generation unit 12 refer to an angle classification table 14 to generate the angle category. The gesture determination unit 13 outputs the determined gesture, e.g., to an external device or the like.

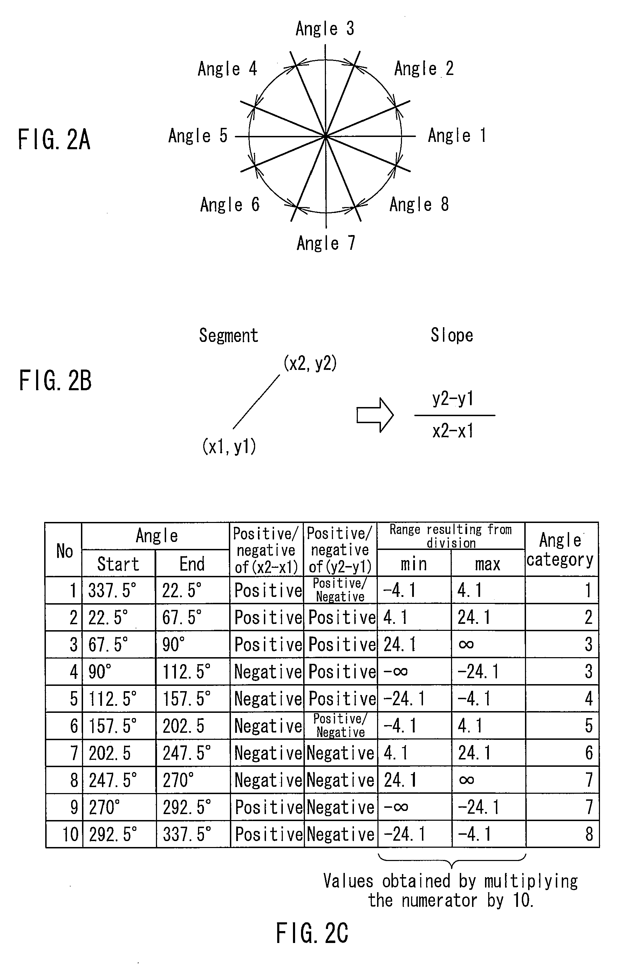

FIG. 2A shows an example of the classification of an angle. FIG. 2B shows an example of the calculation of an angle to be classified. FIG. 2C shows an example of the angle classification table. When the classification of an angle is used, e.g., 360 degrees are divided into 8 parts, and the angles of the 8 parts are numbered 1 through 8 beforehand, as shown in FIG. 2A. Then, as shown in FIG. 2B, the slope of a segment (y2 - y1/x2 - x1) representing the locus of two input coordinates (x1, y1) and (x2, y2) is calculated. For example, the angle of inclination of the tangent is obtained from the calculated slope (i.e., the angle θ that satisfies tan θ = (y2 - yl/x2 - xl)), and classified into any one of the angle categories based on the angle classification table shown in FIG. 2C. The angle of each of the angle categories or the number of the angle categories is not limited to the above.

For example, when the input coordinates are acquired every 10 ms from the input device such as a touch panel or a touch pad to determine a gesture, the angle category is calculated every 10 ms, and the gesture can be accurately determined based on a plurality of the angle categories (referred to as an "angle sequence" in the following) for each predetermined time period (e.g., 50 ms).

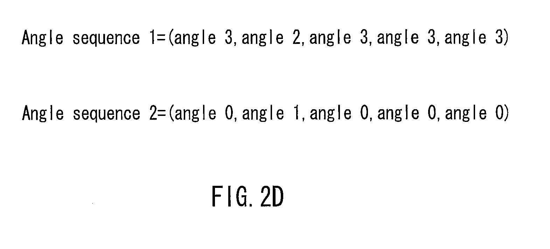

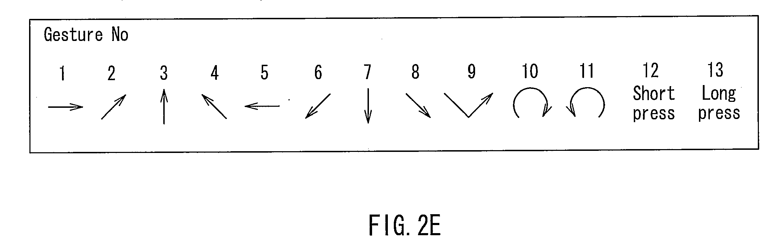

FIG. 2D shows an example of the angle sequence. FIG. 2E shows an example of each gesture that is determined from the angle sequence. The angle sequence includes a plurality of the angle categories. For example, the "angle sequence 1" shown in FIG. 2D includes five angle categories: "angle 3", "angle 2", "angle 3", "angle 3", and "angle 3". When the angle category of the "angle sequence 1" in a time period of 50 ms is determined, the angle category "angle 3" is selected by a majority rule as a representative value. Moreover, the gesture represented by the gesture number 3 (up arrow) that corresponds to the angle category "angle 3" thus determined can be identified as a gesture corresponding to the "angle sequence 1".

### [1-2. System configuration]

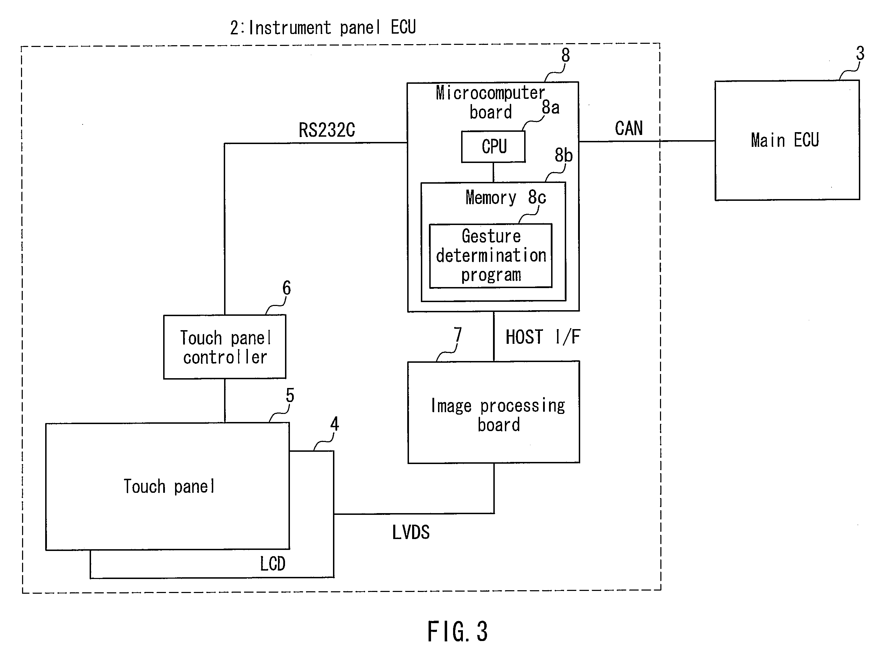

FIG. 3 shows an example of a system configuration using the gesture determination device 1 of the present invention. In FIG. 3, the gesture determination device 1 corresponds to a microcomputer board 8.

An instrument panel ECU 2 and a main ECU 3 constitute a vehicle instrument panel system. The instrument panel ECU 2 and the main ECU 3 are connected, e.g., via an in-vehicle network such as CAN. In this case, the ECUs (electronic control units) are devices provided on different parts of a car. Each of the ECUs can perform various information processing and controls based on the state information or the like obtained from the other ECUs.

The instrument panel ECU 2 includes a LCD (liquid crystal display) 4, a touch panel 5, a touch panel controller 6, an image processing board 7, and the microcomputer board 8. The microcomputer board 8 includes at least a CPU 8a and a memory 8b, and the memory 8b stores a gesture determination program 8c.

The instrument panel ECU 2 receives an instruction from the main ECU 3 and displays a predetermined screen on the LCD 4. Moreover, the instrument panel ECU 2 notifies the main ECU 3 of a gesture that has been determined based on the operation of a user on the touch panel 5.

In the instrument panel ECU 2, the touch panel controller 6 for controlling the touch panel 5 and the microcomputer board 8 are connected, e.g., by RS232C. The image processing board 7 and the LCD 4 are operably connected, e.g., by LVDS (low voltage differential signaling). The microcomputer board 8 and the image processing board 7 are connected, e.g., by predetermined HOST I/F.

### [1-3. Coordinate data]

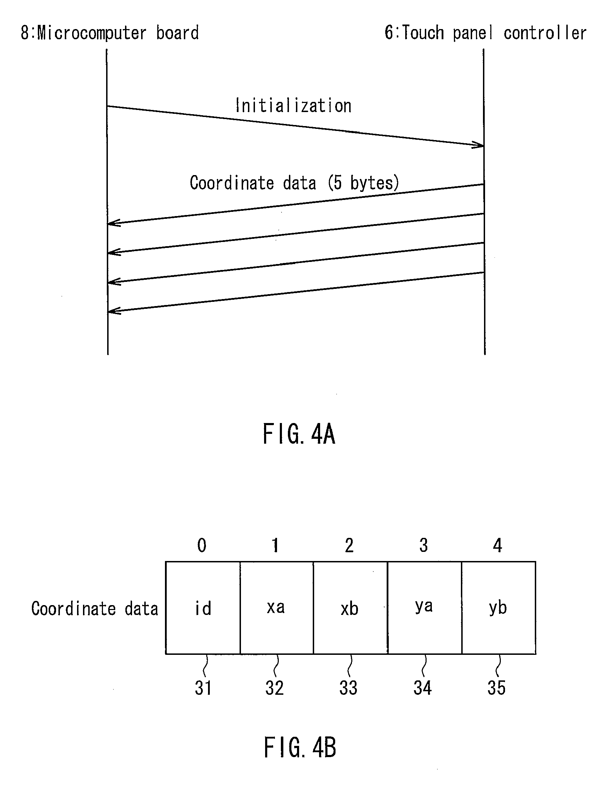

FIG. 4A schematically shows an example of communications between the microcomputer board 8 and the touch panel controller 6. As shown in FIG. 4A, the microcomputer board 8 outputs a predetermined signal to the touch panel controller 6 so as to initialize the touch panel controller 6. Thereafter, the touch panel controller 6 transmits the coordinate data for each predetermined time period (e.g., every 10 ms) to the microcomputer board 8. The coordinate data indicates the coordinates of the position corresponding to the position on the touch panel 5 that is touched by a user.

FIG. 4B shows an example of the coordinate data transmitted from the touch panel controller 6 in this case. The coordinate data shown in FIG. 4B is composed, e.g., of 5 bytes. An "id" field 31 is used to hold a 1-byte code that designates each of attributes "DOWN", "MOVE", and "UP". The attribute "DOWN" represents "pen down" (which means that the fingertip or the pen point comes into contact with the touch panel 5). The attribute "MOVE" represents the movement of the fingertip or the pen point. The attribute "UP" represents "pen up" (which means that the fingertip or the pen point is not in contact with the touch panel 5). An "xa" field 32 and an "xb" field 33 are used to hold the numerical values corresponding to the X-coordinates of the position on the touch panel that is touched by the user. A "ya" field 34 and a "yb" field 35 are used to hold the numerical values corresponding to the Y-coordinates of the position on the touch panel that is touched by the user.

### [1-4. Gesture determination processing]

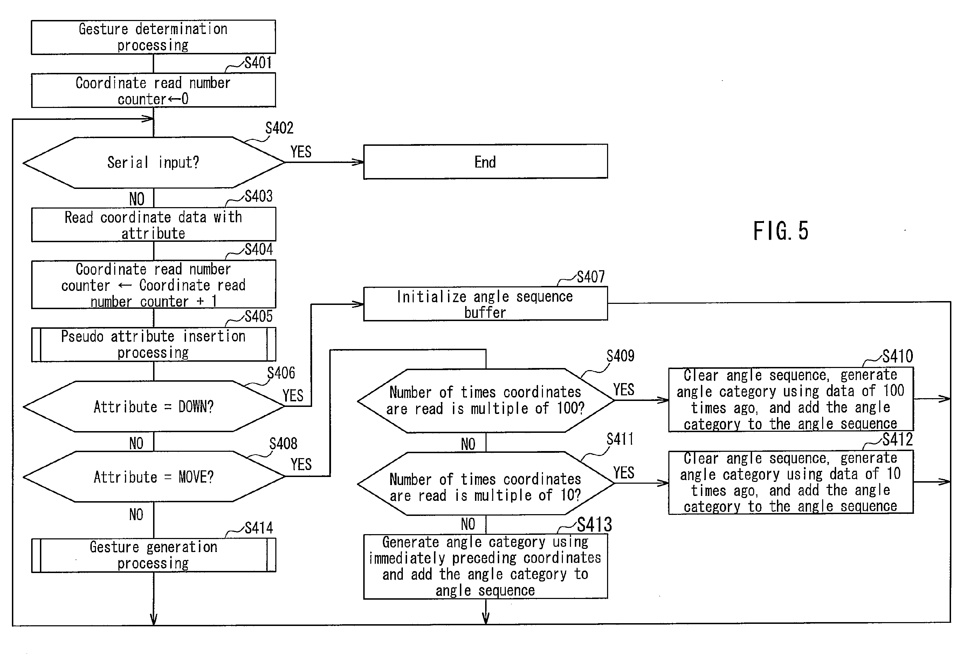

The microcomputer board 8 of the instrument panel ECU 2 performs gesture determination processing based on the coordinate data transmitted from the touch panel controller 6, and notifies the main ECU 3 of the results of the gesture determination processing. FIG. 5 shows an example of a flow chart of the gesture determination processing. In this case, the CPU 8a of the microcomputer board 8 executes the gesture determination program 8c stored in the memory 8b when it starts receiving the coordinate data serially. That is, the CPU 8a performs each of the following processing steps with the execution of the gesture determination program 8c.

The CPU 8a clears a coordinate read number counter to zero (step S401). A detailed method for using the coordinate read number counter will be described later. If the CPU 8a refers to a predetermined buffer area of the memory 8b and finds serial input data (step S402, YES), then the CPU 8a reads this data as coordinate data with an attribute (step S403). On the other hand, if the CPU 8a refers to the predetermined buffer area of the memory 8b and finds no serial input data (step S402, NO), then the CPU 8a ends the processing. After the completion of the reading of the coordinate data with an attribute, the coordinate read number counter is increased by 1 (step S404).

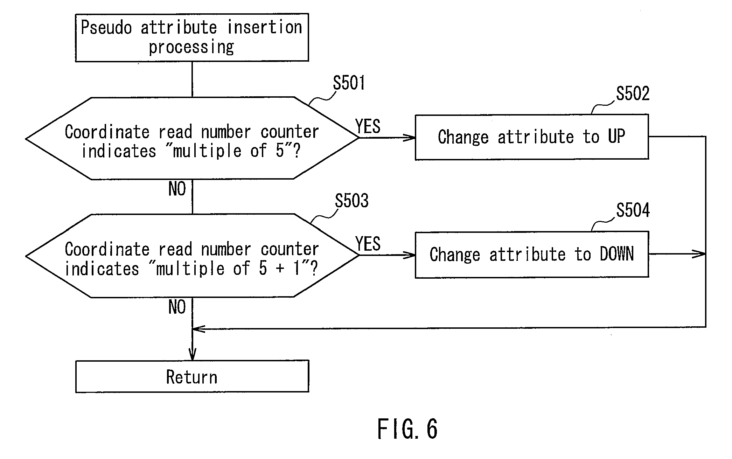

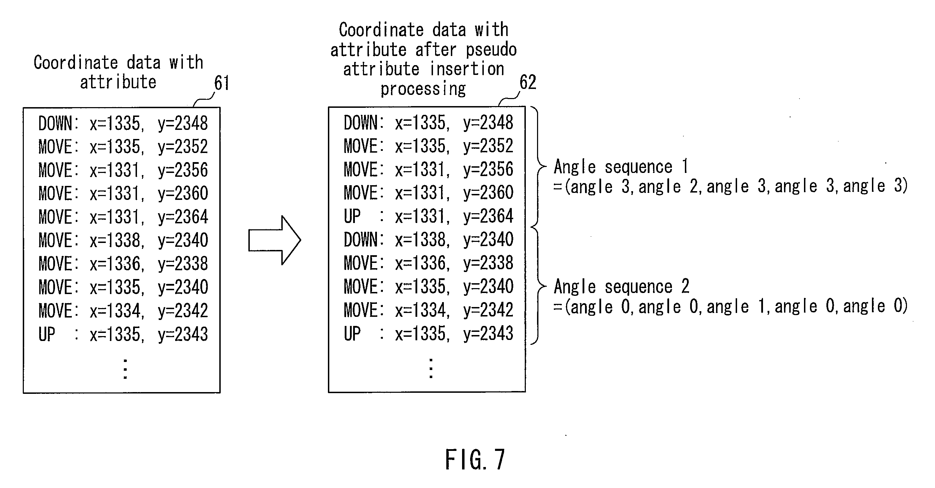

Subsequently, the CPU 8a performs pseudo attribute insertion processing in a subroutine (step S405). FIG. 6 shows an example of a flow chart of the pseudo attribute insertion processing. FIG. 7 shows an example of a schematic diagram of the insertion of a pseudo attribute into the coordinate data transmitted from the touch panel controller 6.

Every time a single gesture is input, the touch panel controller 6 transmits a series of coordinate data with attributes 61 serially. As indicated by the series of coordinate data with attributes 61, first, the coordinate data having an attribute "DOWN" is transmitted. Then, a predetermined number of sets of the coordinate data having an attribute "MOVE" are transmitted continuously. Finally, the coordinate data having an attribute "UP" is transmitted. For example, the touch panel controller 6 transmits each coordinate data every 10 ms.

In this embodiment, gesture generation processing (as will be described later) is performed by using the attribute "UP" as a trigger. Therefore, a pseudo attribute "UP" needs to be inserted in advance at predetermined time intervals and/or every predetermined number of coordinate data by the pseudo attribute insertion processing. As shown in FIG. 6, in the pseudo attribute insertion processing, if the coordinate read number counter indicates a "multiple of 5" (step S501, YES), the attribute of the read coordinate data is changed to "UP" (step S502). If the coordinate read number counter indicates a "multiple of 5 + 1" (step S503, YES), the attribute of the read coordinate data is changed to "DOWN" (step S504). Thus, as shown in FIG. 7, the series of coordinate data with attributes 61 is changed, e.g., to a series of coordinate data with attributes 62 after the pseudo attribute insertion processing. In this case, e.g., the attribute "UP" is inserted into the coordinate data every 50 ms, so that an angle sequence can be formed every 50 ms.

Next, if the attribute of the read coordinate data is "DOWN" (step S406, YES), the CPU 8a initializes an angle sequence buffer on the memory 8b (step S407). Accordingly, the angle sequence that has been held in the previous gesture determination processing is cleared.

On the other hand, if the attribute of the read coordinate data is not "DOWN" (step S406, NO), but "MOVE" (step S408, YES), the CPU 8a determines whether the number of times the coordinate data is read (i.e., the coordinate read number counter) indicates a multiple of 100 (step S409) or a multiple of 10 (step S411).

If the number of times the coordinate data is read (i.e., the coordinate read number counter) indicates neither a multiple of 100 (step S409, NO) nor a multiple of 10 (step S411, NO), the CPU 8a determines a angle category based on the current coordinate data and the immediately preceding coordinate data, and adds the angle category to the angle sequence in the same manner as described above (step S413).
In this case, the memory 8b holds a series of coordinate data that is read during one gesture determination processing.

Specifically, as described above, the CPU 8a calculates the slope of a segment from two input coordinates as shown in FIG. 2B, determines which angle category the calculated slope falls into based on the angle classification table as shown in FIG. 2C, and forms an angle sequence as shown in FIG. 7. In determining the angle category, if a distance between two input coordinates on the segment that represents the locus of the movement is a predetermined value or less, the CPU 8a adds "angle 0" to the angle sequence as the classified angle. This is because the fingertip or the pen point is not likely to move when the distance between two input coordinates is small. For example, if the distance between two input coordinates is within "100 dots", the CPU 8a defines the angle category as "angle 0", assuming that there is no movement.

The repetition of the step S413 provides, e.g., "angle sequence 1 = (angle 3, angle 2, angle 3, angle 3, angle 3)" or "angle sequence 2 = (angle 0, angle 0, angle 1, angle 0, angle 0)", as shown in FIG. 7.

On the other hand, if the number of times the coordinate data is read (i.e., the coordinate read number counter) indicates a multiple of 100 (step S409, YES), the CPU 8a clears the angle sequence, then determines a angle category based on the current coordinate data and the coordinate data that was read 100 times ago, and adds the angle category to the angle sequence (step S410). If the number of times the coordinate data is read (i.e., the coordinate read number counter) indicates a multiple of 10 (step S411, YES), the CPU 8a clears the angle sequence, then determines a angle category based on the current coordinate data and the coordinate data that was read 10 times ago, and adds the angle category to the angle sequence in the same manner as described above (step S412).

In the steps S410 and S412, the reason the angle sequence is cleared is that the gesture determination (as will be described later) is performed by giving priority to the angle category that is determined "when the number of times the coordinates are read is a multiple of 100" or "when the number of times the coordinates are read is a multiple of 10". This is because, since the time interval defined to determine the angle category "when the number of times the coordinates are read is a multiple of 100" or "when the number of times the coordinates are read is a multiple of 10" overlaps the time interval defined to determine the angle category using the immediately preceding coordinate data, it is considered that the angle category determined "when the number of times the coordinates are read is a multiple of 100" or "when the number of times the coordinates are read is a multiple of 10" more accurately reflects the user's intention than the angle category determined using the immediately preceding coordinate data.

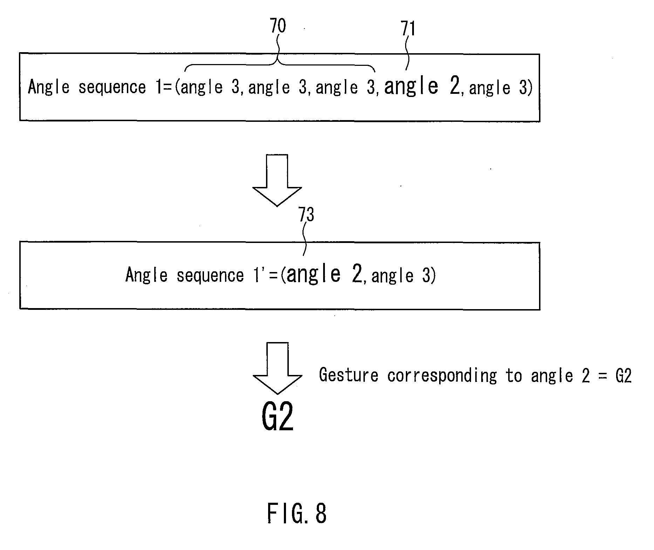

FIG. 8 shows an example of a schematic diagram for explaining a case where the angle sequence is cleared. When a angle category "angle 2" 71 is newly added to the angle sequence, in general, the CPU 8a can add it to "angle sequence 1 = angle 3, angle 3, angle 3" 70 in the same manner as the step S413, and form "angle sequence 1 = angle 3, angle 3, angle 3, angle 2, ... ". However, in the step S410 or S412, when a angle category "angle 2" is newly added to the angle sequence, the CPU 8a clears the group of "angle 3, angle 3, angle 3" 70 that has been held in the angle sequence 1 so far, and then newly adds a angle category "angle 2" 73, as indicated by an angle sequence 1'. Thus, in the gesture generation processing (as will be described later), the gesture determination can be performed by giving priority to the angle category "angle 2".

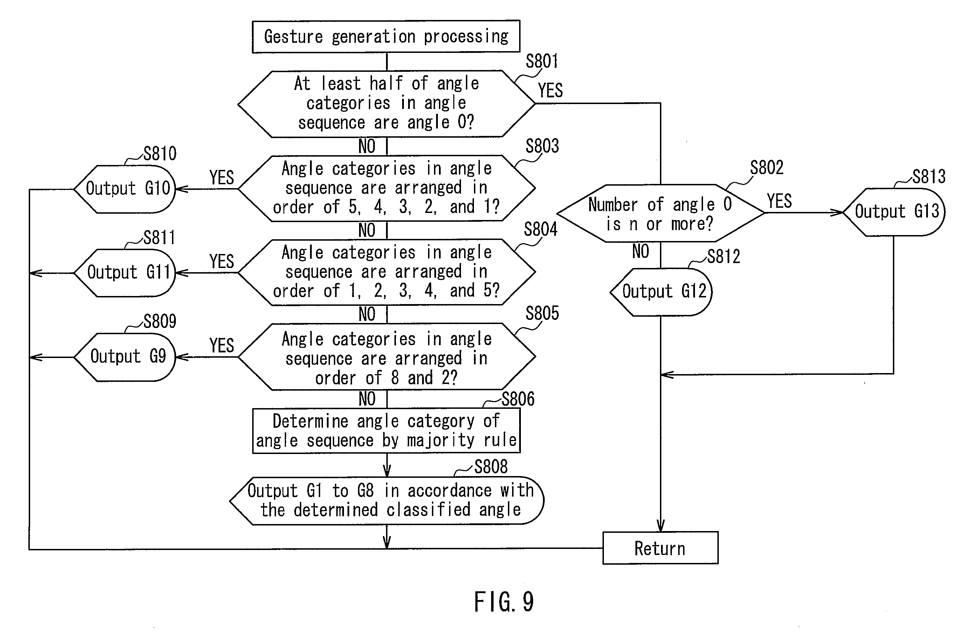

On the other hand, in the step S408, if the attribute of the read coordinate data is not "MOVE" (step S408, NO), the CPU 8a performs the gesture generation processing in a subroutine (step S414). FIG. 9 shows an example of a flow chart of the gesture generation processing.

If at least half of the angle categories in the angle sequence are "angle 0" (step S801, YES), and the number of "angle 0" is a predetermined number (N) or more (step S802, YES), the CPU 8a outputs a gesture that is identified as a code "G 13" (long press shown in FIG. 2E) (step S813). On the other hand, if the number of "angle 0" is less than the predetermined number (N) (step S802, NO), the CPU 8a outputs a gesture that is identified as a code "G12" (short press shown in FIG. 2E) (step S812). The gesture identification codes are output from the microcomputer board 8 to the main ECU 3.

On the other hand, if at least half of the angle categories in the angle sequence are not "angle 0" (step S801, NO), and the angle categories in the angle sequence are arranged in order of "angle 5", "angle 4", "angle 3", "angle 2", and "angle 1" (step S803, YES), the CPU 8a outputs a gesture that is identified as a code "G10" (clockwise rotation shown in FIG. 2E) (step S810).

Moreover, if the angle categories in the angle sequence are arranged in order of "angle 1", "angle 2", "angle 3", "angle 4", and "angle 5" (step S804, YES), the CPU 8a outputs a gesture that is identified as a code "G11" (counterclockwise rotation shown in FIG. 2E) (step S811).

Moreover, if the angle categories in the angle sequence are arranged in order of "angle 8" and "angle 2" (step S805, YES), the CPU 8a outputs a gesture that is identified as a code "G9" (check mark shown in FIG. 2E) (step S809).

If the angle sequence does not satisfy any of the steps S801 to S805, the CPU 8a determines a representative angle category from the angle -categories in the angle sequence by a majority rule, and outputs a gesture identification code (any one of G1 to G8) corresponding to this angle category (step S808).

When a representative angle category is determined from the angle categories in the angle sequence by a majority rule, the CPU 8a determines the representative angle category by giving priority to the angle category that is determined "when the number of times the coordinates are read is a multiple of 100" or "when the number of times the coordinates are read is a multiple of 10". For example, as shown in FIG. 8, when the CPU 8a determines a representative angle category from "angle sequence 1' = angle 2, angle 3" in which the "angle 2" is determined "when the number of times the coordinates are read is a multiple of 100" or "when the number of times the coordinates are read is a multiple of 10", the CPU 8a assigns a predetermined weight to the "angle 2" and selects it preferentially.

As described above, the microcomputer board 8 outputs the gesture identification code to the main ECU 3 for each predetermined time period (e.g., every 50 ms), and the main ECU 3 performs various kinds of processing based on the gesture.

In the functional block diagram of FIG. 1, the "coordinate data acquisition unit" includes, e.g., a processing function of the step S403 in FIG. 5. The "first angle-category generation unit" includes, e.g., a processing function of the step S413 in FIG. 5. The "second angle-category generation unit" includes, e.g., a processing function of the step S410 or S412 in FIG. 5. The "gesture determination unit" includes, e.g., a processing function of the step S414 in FIG. 5 or the steps S801 to S806 in FIG. 9.

### [2. Other embodiments]

### [2-1. Modified example]

(1) In Embodiment 1, the angle sequence is cleared in the steps S410 and S412. However, the angle sequence may be cleared in the gesture generation processing (FIG. 9) instead of the steps S410 and S412.

(2) In Embodiment 1, both the process of clearing the angle sequence (steps S410 and S412) and the process of assigning a predetermined weight to the angle category and selecting it preferentially (step S808) are performed. However, it is also possible to perform only one of these two processes. In this case, there may be a difference in weight between the angle category determined "when the number of times the coordinates are read is a multiple of 100" and the angle category determined "when the number of times the coordinates are read is a multiple of 10". For example, weighting may be performed so as to give priority to the angle category determined "when the number of times the coordinates are read is a multiple of 100".

### [2-2. Scope of application]

Embodiment 1 describes an example in which the user inputs a gesture to the touch panel with the fingertip or the like. However, devices other than the touch panel also may be used as long as the coordinates can be input to such devices. For example, the gesture determination may be performed based on the coordinate data input from a touch pad, a mouse, a trackball, etc.

### [2-3. Method for implementing each functional block]

In Embodiment 1, each of the functional blocks shown in FIG. 1 is implemented by the processing of the CPU that executes the program. However, part or whole of the functional blocks may be implemented by hardware such as a logic circuit or the like.

### Industrial Applicability

The present invention is useful for a device that determines a gesture based on the input coordinates.

## Claims

1. A gesture determination device for determining a gesture performed by a user comprising:
a coordinate data acquisition unit that acquires coordinate data for each predetermined time period generated by an operation of the user;
a first angle-category generation unit that generates a first angle-category at first time intervals based on the coordinate data;
a second angle-category generation unit that generates a second angle-category at second time intervals based on the coordinate data, wherein the second time interval is longer than the first time interval; and
a gesture determination unit that determines a gesture based on the first angle-category and/or the second angle-category,
wherein when a time interval defined to generate the second angle-category includes an overlapping time period with a time interval defined to generate the first angle-category, the gesture is determined by giving priority to the second angle-category over the first angle-category.

2. The gesture determination device according to claim 1, wherein when the time interval defined to generate the second angle-category includes an overlapping time period with the time interval defined to generate the first angle-category, the gesture is determined without taking into account the first angle-category that is generated in the overlapping time period.

3. The gesture determination device according to claims 1 or 2, wherein when the time interval defined to generate the second angle-category includes an overlapping time period with the time interval defined to generate the first angle-category, the gesture is determined by assigning a predetermined weight to the second angle-category that is generated in the overlapping time period.

4. The gesture determination device according to any one of claims 1 to 3, wherein the gesture is determined based on the first angle-category and/or the second angle-category every time a predetermined number of sets of the coordinate data are acquired.

5. The gesture determination device comprising:
a third angle-category generation unit that generates a third angle-category at third time intervals based on the coordinate data, wherein the third time interval is longer than the second time interval,
wherein the gesture determination unit determines a gesture based on the first angle-category, the second angle-category, and/or the third angle-category, and
when a time interval defined to generate the third angle-category includes an overlapping time period with the time interval defined to generate the first angle-category or the time interval defined to generate the second angle-category, the gesture is determined by giving priority to the third angle-category over the first angle-category or the second angle-category.

6. A program for implementing a gesture determination device that determines a gesture performed by a user with use of a computer, comprising:
allowing the computer to execute:
coordinate data acquisition processing that acquires coordinate data for each predetermined time period generated by an operation of the user;
first angle-category generation processing that generates a first angle-category at first time intervals based on the coordinate data;
second angle-category generation processing that generates a second angle-category at second time intervals based on the coordinate data, wherein the second time interval is longer than the first time interval; and
gesture determination processing that determines a gesture based on the first angle-category and/or the second angle-category,
wherein when a time interval defined to generate the second angle-category overlaps a time interval defined to generate the first angle-category, the program allows the computer to execute the gesture determination processing by giving priority to the second angle-category over the first angle-category.

7. A method for determining a gesture performed by a user comprising:
a coordinate data acquisition step that acquires coordinate data for each predetermined time period generated by an operation of a user;
a first angle-category generation step that generates a first angle-category at first time intervals based on the coordinate data;
a second angle-category generation step that generates a second angle-category at second time intervals based on the coordinate data, wherein the second time interval is longer than the first time interval; and
a gesture determination step that determines a gesture based on the first angle-category and/or the second angle-category,
wherein when a time interval defined to generate the second angle-category overlaps a time interval defined to generate the first angle-category, the gesture is determined by giving priority to the second angle-category over the first angle-category.

8. A touch panel system comprising:
a touch panel; and
a gesture determination device that determines a gesture performed by a user,
wherein the gesture determination device comprise
a coordinate data acquisition unit that acquires coordinate data for each predetermined time period generated by an operation of the user on the touch panel;
a first angle-category generation unit that generates a first angle-category at first time intervals based on the coordinate data;
a second angle-category generation unit that generates a second angle-category at second time intervals based on the coordinate data, wherein the second time interval is longer than the first time interval; and
a gesture determination unit that determines a gesture based on the first angle-category and/or the second angle-category, and
wherein when a time interval defined to generate the second angle-category overlaps a time interval defined to generate the first angle-category, the gesture is determined by giving priority to the second angle-category over the first angle-category.
